# EUROPEAN PATENT SPECIFICATION

(11) **EP 3 845 320 B1**
(45) Date of publication and mention of the grant of the patent: **16.10.2024**
(21) Application number: 18807105.4
(22) Date of filing: 29.08.2018
(51) Int. Cl.: B08B 3/02, B29D 11/00

(54) **TRAY CLEANING STATION AND PRODUCTION LINE FOR MANUFACTURING OPHTHALMIC LENSES PROVIDED WITH SAID STATION**
TABLETTREINIGUNGSSTATION UND PRODUKTIONSLINIE ZUR HERSTELLUNG VON OPHTHALMISCHEN LINSEN MIT DIESER STATION
STATION DE NETTOYAGE DE PLATEAUX ET CHAÎNE DE PRODUCTION POUR FABRIQUER DES LENTILLES OPTHTALMIQUES POURVUE DE LADITE STATION DE NETTOYAGE

(43) Date of publication of application: 07.07.2021
(73) Proprietor: Insomec Integra Soluciones, S.L., 08960 Sant Just Desvern - Barcelona (ES)
(72) Inventor: CASAS GILBERGA, Eugenio, 08960 Sant Just Desvern - Barcelona (ES)
(74) Representative: Balder IP Law, S.L.
(86) International application number: PCT/ES2018/070578
(87) International publication number: WO 2020/043923

(56) References cited:
- WO-A1-2006/111898
- DE-A1- 3 436 865
- DE-A1- 3 515 829
- GB-A- 1 403 036
- US-A- 3 345 994
- US-A- 3 675 665
- US-A1- 2008 196 748

## Description

### TECHNICAL FIELD

The present invention relates to jobtray cleaning stations and to production lines for manufacturing ophthalmic lenses provided with such a station, which main objective is to remove dust from the lens supporting trays collected after passing through the polishing stations or to clean them in general. In this way, the degree of dirt of the lens support trays is reduced, which in turn improves the cleaning of the station in general, and therefore its performance.

### STATE OF THE ART

During the fabrication of ophthalmic lenses, the semi-products are shaped and polished and part of the resulting powder (small particles of residues) remain in the tray. When referring to tray, any type of base, plate or container for placing on top the lenses is included as well. Focused on this problem, the literature shows different approaches:
In the document KR101470284 B1 the conveyor type cleaning device uses air supply pipes and suction nozzles directed to the object to be cleaned, which is tilted 80° inside a cleaning chamber. It uses air instead of liquid, which may produce the powder to fly and keep suspended in the air inside the chamber and fall again on the tray. The medium directed to the tray should drag the powder away.

In the field of cleaning trays, the document FR2959643 A1 displays a machine with a conveyor that tilts the trays in a vertical direction and cleans them with a rinsing module. This process cannot be reproduced for lens trays because it considers neither that the dirty water falling from the prior tray affects the following tray nor that each tray is not as clean or dirty as the others, and the time and resources used should be particularized to each tray.

As it has been explained, the particular composition of the dust makes them very difficult to be removed from a tray, this is mentioned again in US2008196748 A1 which discloses a tray cleaning station in accordance with the preamble of claim 1. In this document, a specific system of nozzles directed to the trays is developed to remove the stray lenses that get stuck to the plate. As it is explained in the document, it is necessary that the tray is as clean as possible to assure the quality of the following lenses placed on it.

The complexity of the task increases when the size of the lenses reduces, as they can remain stuck to the tray unnoticed. Therefore, the pressure applied to the tray by the cleaning medium (water) has to be much greater (around 20Pa). However, when such a large pressure is applied, another problem appears: the risk of propelling particles to the adjacent trays in a conveyor dirtying them, make it necessary to retire each tray from the line, clean it, and turn it back to the line.

Cleaning brushes cannot be used either as they will get quickly covered by powder particles and their cleaning capacity will be none, changing continuously the brushes means increasing prices and stopping the fabrication process too often.

When doing ophthalmic lenses, each lens is customized for a specific person, therefore the production line is very small and sensitive to errors. Moreover, the tools are precise and should take up a small room. Therefore, train-wash tunnels such as those disclosed in the prior art documents must be avoided, and an equivalent system is needed.

US2008196748A1 discloses a system and a method for cleaning process trays. DE3515829A1 discloses a method for cleaning workpiece carriers moving on conveyor belts and washing apparatus for carrying out the method. US3675665A discloses a case washing machine. DE3436865A1 discloses a device for cleaning bottle cases.

### DESCRIPTION OF THE INVENTION

For overcoming the mentioned drawbacks and achieve the afore mentioned aims, the present invention proposes a tray cleaning station for ophthalmic lenses production line, the tray cleaning station comprising a conveyor for the transport of trays supporting the lenses, which comprises extraction means of a tray from the conveyor, a chamber for cleaning the tray and transfer means of the tray between the extraction means and the chamber.

By separating or extracting the tray, dirt removed from the other trays does not affect the cleaning. We also avoid that, while cleaning a tray, the dirt does not reach the adjoining ones.

In addition, when removing only one tray each time it is possible to clean it with a suitable treatment according to its degree of dirt.

Another advantage of the station object of the invention is that it does not interfere in the line, since it washes the trays by extracting them from the circuit.

In a washing tunnel, sequential cleaning of all the trays is guaranteed. The installation of the invention does not ensure in a cycle the cleaning of all the trays, but that the washing of all the trays ends up ensuring by accumulation of cycles. Obviously, theoretically there is a non-null possibility that a tray will never be extracted. However, as indicated below, means can be provided to prevent this from happening, such as visual inspection, either by an operator or artificial vision, which allows to detect trays that have accumulated dirt due to lack of washing. In any case, the skilled person, by means of probability calculations, will determine the necessary frequency of visual inspection of the line to guarantee that all the trays end up being cleaned.

In accordance with the invention, the extraction means comprise a rotating base which supports two arms, each provided in its end with a pad destined to press laterally a tray, a rotation axis of the rotating base, and an actuator for rotating the axis, the rotating base being provided with a linear actuator for adjusting the distance between the arms, thus allowing to clamp a tray between the pads.

In some embodiments, the transfer means comprise two clamping arms, each provided in its end with a pad, a translating base which supports the clamping arms, and a guide for the translational movement of the translating base, the translating base comprising a linear actuator for adjusting the distance between the clamping arms, thus allowing to clamp a tray between the pads.

In some embodiments, the pads of the arms of the rotating base are arranged to clamp the trays on two sides of the trays and the pads of the clamping arms are arranged to clamp the trays on the other two sides of the trays.

In some embodiments, the extraction means are configured to carry out a rotation having an angle greater than 90º, thus allowing to overturn a tray.

In some embodiments, the chamber comprises a vertical slot for introducing the tray.

This feature, combined with the translatory movement provided by the transfer means allows the tray to be arranged vertically, which is the optimum position for cleaning and drying the tray.

In some embodiments, the chamber comprises at least two air conducting ducts vertically arranged and at least two water conducting ducts vertically arranged.

Thus at least two curtains of water and air for cleaning the tray are created.

In some embodiments, the air conducting ducts and the water conducting ducts are arranged such that they define therebetween a vertical slot coincident with the vertical slot, the transfer means being arranged to introduce the tray through the vertical slot and place it between the air conducting ducts and the water conducting ducts.

With the same movement of translation, it is possible to introduce the tray in the camera and then between the air and water conduits.

In some embodiments, the chamber comprises a sliding door destined to close the vertical slot, and actuator means for automatically closing the sliding door, the sliding door and the chamber comprising recesses for allowing the introduction of the clamping arms, thus allowing to close the chamber when a tray is being washed and move it in translational movement for exposing all its surface to the nozzles.

With a closed chamber, contaminating of the other trays is avoided.

In some embodiments, the pads comprise adjusting means for adjusting the distance therebetween.

Thus it is possible to use trays of different sizes and suppliers.

In some embodiments, the tray cleaning station comprises one reservoir arranged below the ducts.

In other embodiments, the tray cleaning station comprises two reservoirs arranged below the ducts and a deflector allowing to deflect the water falling to either of the reservoirs. Thus it is possible to reuse the water and save it.

In some embodiments, the tray cleaning station comprises a pump for pumping water in the chamber at a pressure comprised between 10 and 80 bar.

It has been determined that these pressures are suitable for cleaning the dirt from the machining (oils, shavings) and removing from the trays the polishing dust.

In some embodiments, the tray cleaning station has a controller, the controller being configured to apply different cleaning programs.

The invention also relates to a production line for manufacturing ophthalmic lenses provided with treatment stations connected by at least one conveyor for the transport and transfer, between stations of trays supporting the lenses, the production line comprising at least one tray cleaning station according to any of the variants of the tray cleaning station.

Preferably, the cleaning station is configured to be always cleaning a tray, autonomously and automatically, without the need for an operator.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:
Fig.1 shows the cleaning station W with all its parts inside a single cubicle. Here the cleaning chamber CH and the tray conveyor T can be seen.
Fig. 2 shows the interior of the cleaning station with all its parts: the trays B are separated by extraction means X and rotated around the axis T they pass through the vertical slot VS in the wall of the chamber moved by the guide G. In the cleaning chamber CH there are the air outlet ducts W1 and water outlet ducts W2 and the collector D which redirects the water to the tank and/or the tanks D1 and D2.
Fig. 3 shows an enlarged image of the inside of the cleaning station. This figure allows to see the arms of the rotation base X1, X2, the actuator DX and the pressure pads P1 and P2.

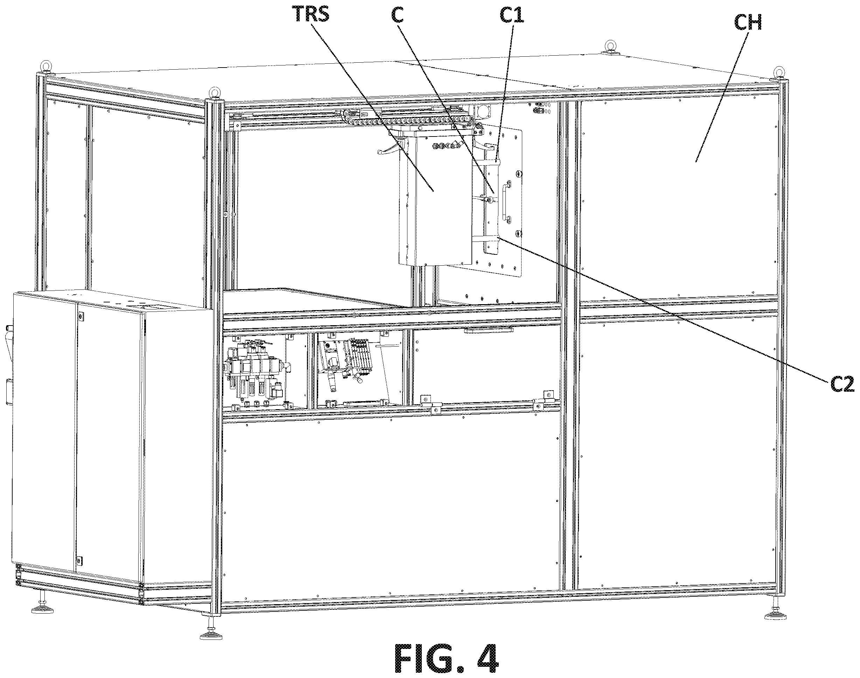

Fig. 4 shows the walls of the cleaning chamber CH through which the tray B passes from the translational base TRS.
Fig. 5 shows the adjustment means AM that hold the trays B by means of the pads P1 to insert them through the vertical slot VS with recesses S1, S2. The rotation base BX places the tray vertically and holds it with its arm X1.

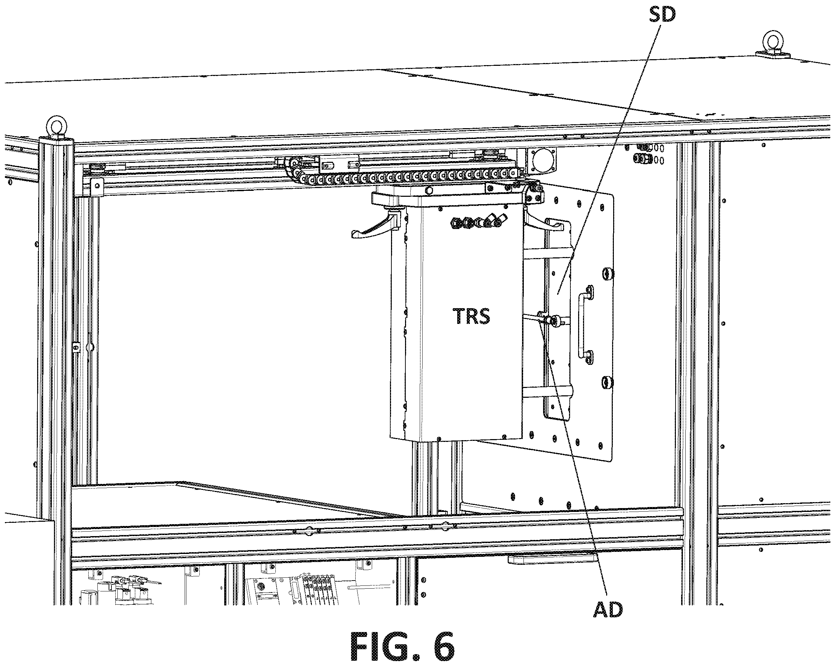

Fig. 6 shows the slot VS closed by a sliding door SD with the tray already introduced inside the chamber. There is an actuator AD for actuating the door.
Fig. 7 shows the guide G, the translation base TRS with its translational means TR1, TR2, TR3, TR4 that help to move the tray B.
Fig. 8 schematically shows the production line LP with all its different treatment stations ET through which the trays B transport the lenses L, where the cleaning station W is highlighted. The figure shows the air W1 and water W2 ducts between which there is a tray B vertically placed, the transference means TR and the extraction means X.

### DESCRIPTION OF A WAY OF CARRYING OUT THE INVENTION

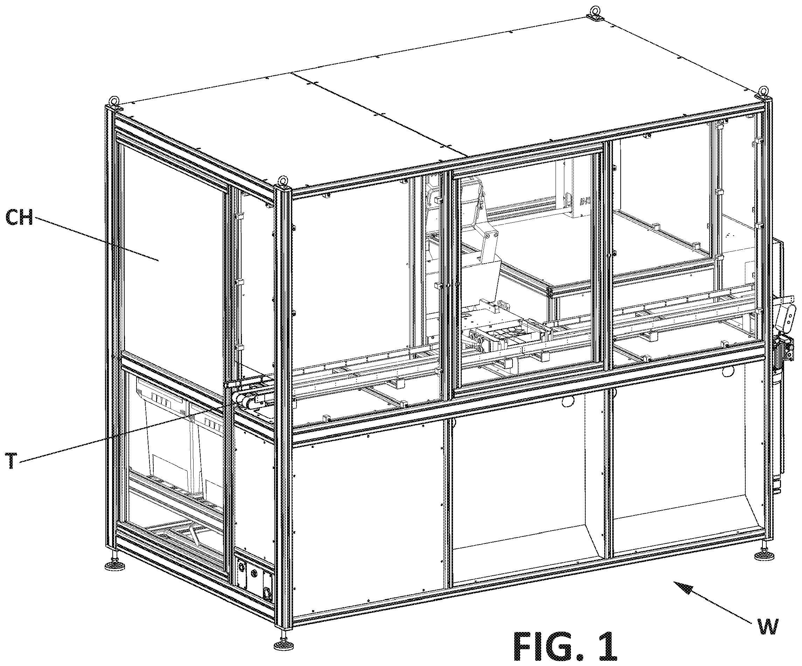

As shown in FIGS. 1, 7 and 8, according to a preferred embodiment, herein it is disclosed a tray cleaning station W for ophthalmic lenses production lines LP.

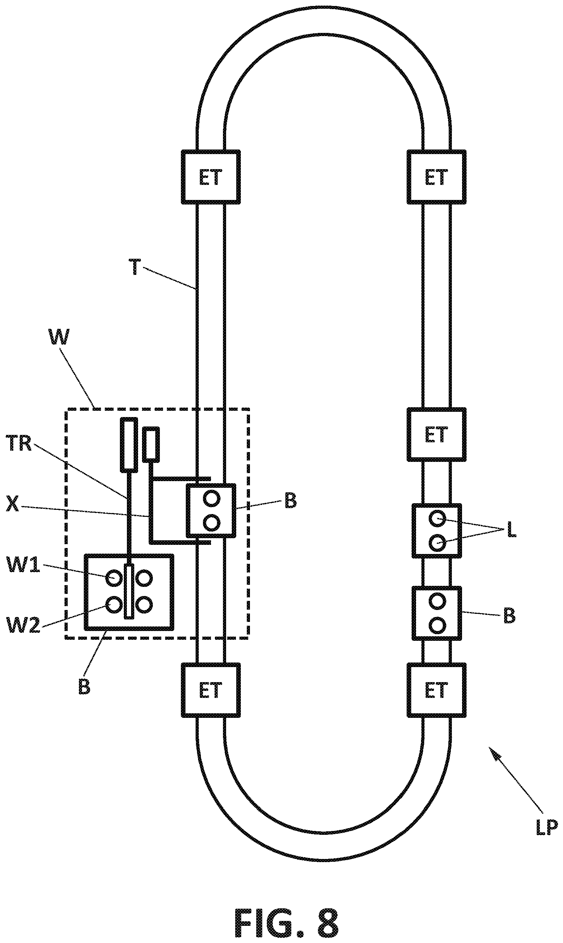

A line as such is schematically shown in FIG. 8.

The tray cleaning station W comprises a conveyor T for the transport of trays B supporting the lenses, extraction means X of a tray B from the conveyor T, a chamber CH for cleaning the tray B and transfer means TR of the tray B between the extraction means X and the chamber CH.

The operation is simple: instead of making all the trays B to pass through a cleaning tunnel, the present invention takes out one tray from the conveyor T by using the extraction means. Then, the tray is transferred from the extraction means to the transfer means, which introduces the tray T in the cleaning chamber CH.

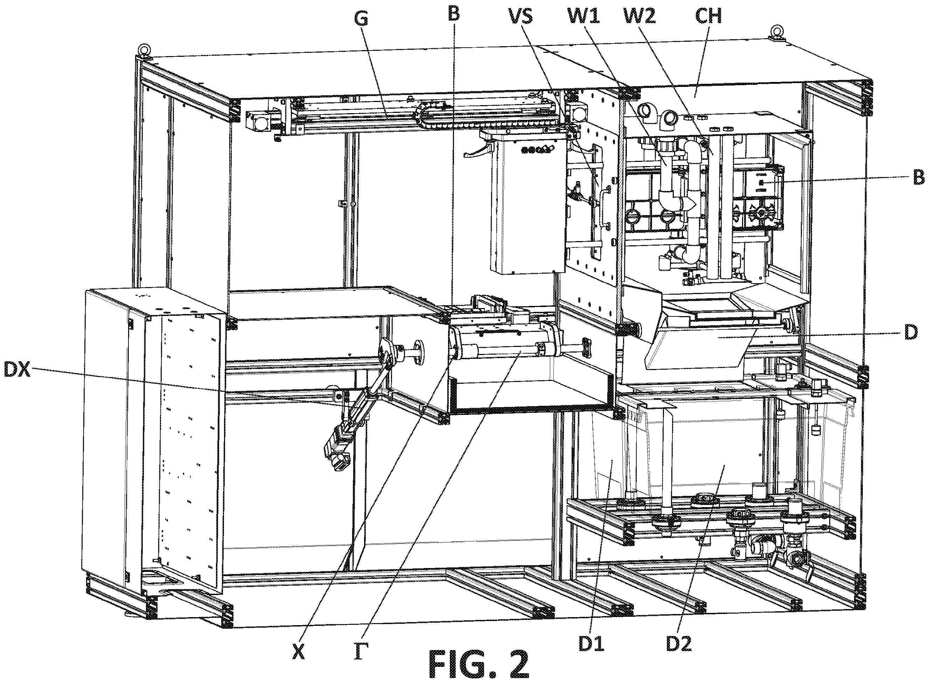

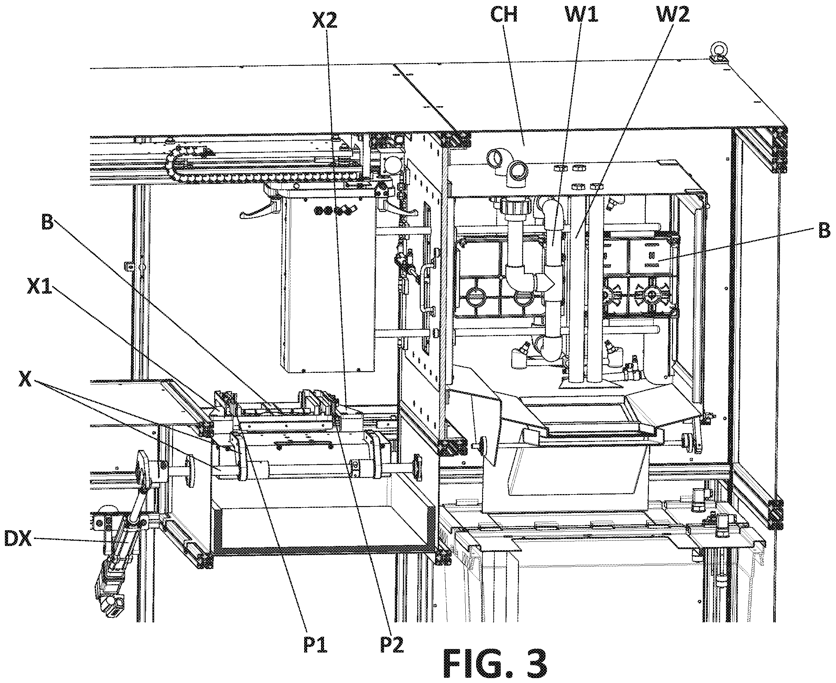

According to the embodiment shown in FIGS. 2, 3 the extraction means X comprise a rotating base BX which supports two arms X1, X2.

Each arm X1, X2 is provided in its end with a pad P1, P2 destined to press laterally a tray B.

As shown in FIGS. 2 and 3, the base BX rotates around a rotation axis Γ driven by an actuator DX for rotating the axis Γ.

The rotating base BX is provided with a linear actuator (not shown) for adjusting the distance between the arms X1, X2, thus allowing to clamp a tray B between the pads P1, P2 and then raise it by rotating the arms around the axis Γ.

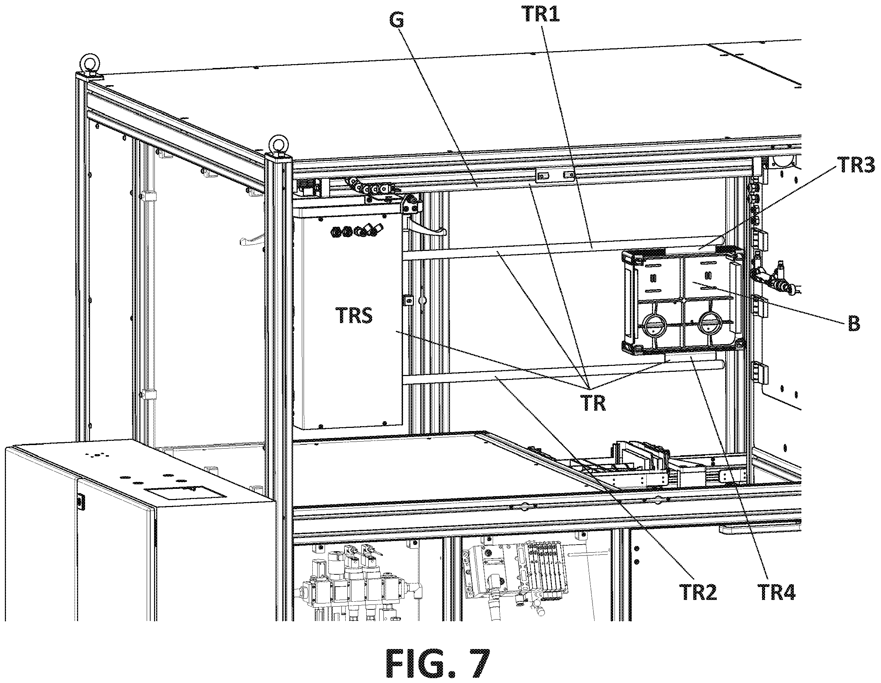

As shown in FIG. 7, the transfer means TR comprise two clamping arms TR1, TR2, each provided in its end with a pad TR3, TR4. The operating principle is similar as for the extraction means X.

The clamping arms TR1, TR2 are supported by a translating base TRS, which is guided by a guide G according to a translational movement.

To that end, the translating base TRS comprises a linear actuator for adjusting the distance between the clamping arms TR1, TR2, thus allowing to clamp a tray B between the pads P3, P4.

The pads P1, P2 of the arms X1, X2 of the rotating base BX are arranged to clamp the trays B on two sides of the trays B and the pads TR3, TR4 of the clamping arms TR1, TR2 are arranged to clamp the trays B on the other two sides of the trays B, thus allowing a simple transfer from the rotating to the translational means.

A special feature of the invention is that the extraction means X are configured to carry out a rotation having an angle greater than 90º, thus allowing to overturn a tray B and void it form gross objects that could be accidentally present therein. A recollecting tray RB is placed on the other side of the axis Γ with respect to the conveyor T, thus allowing to collect the objects falling from the overturned tray B.

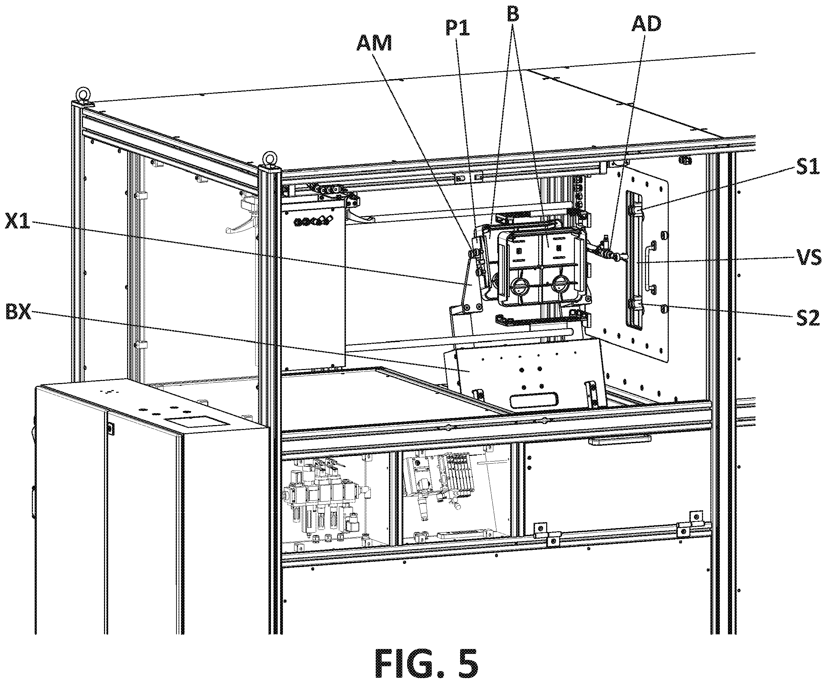

Then, the tray B is placed vertically, as shown in FIG. 5, then ready to be inserted in a vertical slot VS for introducing the tray B into the chamber CH.

As shown in FIG. 3, the chamber CH comprises at least two air conducting ducts W1 vertically arranged and two sets of water conducting ducts W2 vertically arranged.

These air conducting ducts W1 and the water conducting ducts W2 are arranged such that they define therebetween a vertical slot coincident with the vertical slot VS, the transfer means TR being arranged to introduce the tray B through the vertical slot VS and place it between the air conducting ducts W1 and the water conducting ducts W2.

The chamber CH is completed with a sliding door SD destined to close the vertical slot VS, and actuator AD means for automatically closing it.

To tightly close the chamber, the sliding door SD and the chamber CH comprise recesses S1, S2 for allowing the introduction of the clamping arms TR1, TR2, thus allowing to close the chamber CH when a tray B is being washed and move it in translational movement for exposing all its surface to the nozzles, as shown for example in FIG. 3.

Since different production lines can use different tray formats, the pads comprise adjusting means AM for adjusting the distance therebetween. These adjusting means can have the form of screws.

The station comprises at least a reservoir D1 below the chamber, arranged to collect the cleaning liquids.

As shown in FIG. 2, optionally the station comprises two reservoirs D1, D2 arranged below the ducts W1, W2 and a deflector D allowing to deflect the water falling to either of the reservoirs D1, D2.

The station comprises a pump for pumping water in the chamber CH at a pressure comprised between 10 and 80 bar. These pressures have proven to be effective to efficiently remove the dirt and the dust adhered to the trays B.

One of the major advantages of the inventive station is that it allows to apply different cleaning programs to each tray B depending on its dirt degree. To that end, the station is provided with a controller, the controller being configured to apply different cleaning programs.

The station can be provided with means for detecting the state of dirt of the trays B. These means can be based for example in an artificial vision system, or a reader of tags indicating the state of dirt of the trays B, that could have been placed/ adhered to the trays in a previous stage, either manually or automatically.

The station has been specially conceived for its integration in a production line LP for manufacturing ophthalmic lenses L provided with treatment stations ET, as shown in FIG. 8.

The production line has treatment stations, for example polishing stations, connected by at least one conveyor T for the transport and transfer of trays B supporting the lenses L. According to the present invention, one of the stations is a tray cleaning station W according to any of the variants disclosed above.

An important aspect of the invention, as can be seen in the figures, is that all the components of the station are easily accessible for maintenance, both to clean and to fix them. These tasks are usually much more complicated in a washing tunnel.

According to a preferred aspect of the invention, the cleaning station is configured to be always cleaning a tray B.

That is to say, instead of cleaning the trays in a tunnel, with the inconveniences that this entails, here we opt for a station arranged in parallel, that is, that takes out trays of the line and cleans them. The station is set to always be cleaning a tray. That is to say that it does not clean all the trays that go through the conveyor, but as soon as a tray has just been cleaned, the next tray that can be taken is extracted from the conveyor.

Obviously, that does not mean that all the trays are cleaned consecutively, as would happen in a tunnel. It is also obvious that there is a non-zero probability that a tray in a certain time interval does not end up being cleaned.

However, it is advantageously provided that the station has means for recognizing a dirt indicator of the tray, which may be a label previously adhered by an operator or an artificial vision system to finish cleaning trays that are travelling in the conveyors without being cleaned.

The invention also relates to a method of washing trays in a ophthalmic lenses production line LP, which comprises the steps consisting of:
a) Passing the trays B through a conveyor belt T arranged in front of a tray cleaning station W;
b) Extracting a tray B del conveyor T by means of extraction means X;
c) Turn the tray B an angle greater than 90º by means of the extraction means X;
d) Transfer the tray B to a tray B cleaning chamber CH by means of transfer means TR;
e) By means of the transfer means TR perform to and fro movements inside the chamber CH for washing the tray B;
f) Transfer the tray B back to the extraction means X by means of the transfer means TR;
g) Place back the tray B in the conveyor T by using the extraction means X.

In this text, the term "comprises" and its derivations such as "comprising", etc. should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

## Claims

1. Tray cleaning station (W) for ophthalmic lenses production line (LP), the tray cleaning station (W) comprising a conveyor belt (T) for the transport of trays (B) supporting the lenses, comprising extraction means (X) of a tray (B) from the conveyor belt (T), a chamber (CH) for cleaning the tray (B) and transfer means (TR) of the tray (B) between the extraction means (X) and the chamber (CH), **characterized in that** the transfer means are configured to introduce the tray (T) in the cleaning chamber (CH) and wherein the extraction means (X) comprise a rotating base (BX) which supports two arms (X1, X2), each provided in its end with a pad (P1, P2) destined to press laterally a tray (B), a rotation axis (Γ) of the rotating base (BX), and an actuator (DX) for rotating the axis (Γ), the rotating base (BX) being provided with a linear actuator for adjusting the distance between the arms (X1, X2), thus allowing to clamp a tray (B) between the pads (P1, P2).

2. Tray cleaning station (W) according to any of the previous claims, wherein the transfer means (TR) comprise two clamping arms (TR1, TR2), each provided in its end with a pad (TR3, TR4), a translating base (TRS) which supports the clamping arms (TR1, TR2), and a guide (G) for the translational movement of the translating base (TRS), the translating base (TRS) comprising a linear actuator for adjusting the distance between the clamping arms (TR1, TR2), thus allowing to clamp a tray (B) between the pads (P3, P4).

3. Tray cleaning station (W) according to claims 1 and 2, wherein the pads (P1, P2) of the arms (X1, X2) of the rotating base (BX) are arranged to clamp the trays (B) on two sides of the trays (B) and the pads (TR3, TR4) of the clamping arms (TR1, TR2) are arranged to clamp the trays (B) on the other two sides of the trays (B).

4. Tray cleaning station (W) according to any of the preceding claims, wherein the extraction means (X) are configured to carry out a rotation having an angle greater than 90°, thus allowing to overturn a tray (B).

5. Tray cleaning station (W) according to any of the previous claims, wherein the chamber (CH) comprises a vertical slot (VS) for introducing the tray (B).

6. Tray cleaning station (W) according to any of the previous claims, wherein the chamber (CH) comprises at least two air conducting ducts (W1) vertically arranged and at least two water conducting ducts (W2) vertically arranged.

7. Tray cleaning station (W) according to claims 5 and 6, wherein the air conducting ducts (W1) and the water conducting ducts (W2) are arranged such that they define therebetween a vertical slot coincident with the vertical slot (VS), the transfer means (TR) being arranged to introduce the tray (B) through the vertical slot (VS and place it between the air conducting ducts (W1) and the water conducting ducts (W2).

8. Tray cleaning station (W) according to claim 2 and claim 5 or claim 7, wherein the chamber (CH) comprises a sliding door (SD) destined to close the vertical slot (VS), and actuator (AD) means for automatically closing the sliding door (SD), the sliding door (SD) and the chamber (CH) comprising recesses (S1, S2) for allowing the introduction of the clamping arms (TR1, TR2), thus allowing to close the chamber (CH) when a tray (B) is being washed and move it in translational movement for exposing all its surface to the nozzles.

9. Tray cleaning station (W) according to any of the preceding claims, wherein the pads comprise adjusting means (AM) for adjusting the distance therebetween, and then adapt the station to the treatment of different tray formats.

10. Tray cleaning station (W) according claim 6, which comprises one or two tanks (D1, D2) arranged below the ducts (W1, W2) and a deflector (D) allowing to deflect the water falling to either of the reservoirs (D1, D2).

11. Tray cleaning station (W) according to any of the preceding claims, which comprises a pump for pumping water in the chamber (CH) at a pressure comprised between 10 and 80 bar.

12. Tray cleaning station (W) according to any of the preceding claims, which has a controller, the controller being configured to apply different cleaning programs.

13. Production line (LP) for manufacturing ophthalmic lenses (L) provided with treatment stations (ET) connected by at least one conveyor belt (T) for the transport and transfer, between stations (ET) of trays (B) supporting the lenses (L), the production line (LP) comprising at least one tray cleaning station (W) according to any of the preceding claims.

14. Production line (LP) according to claim 13, wherein the cleaning station is configured to be always cleaning a tray (B).

## Patentansprüche

1. Tablett-Reinigungsstation (W) für eine Produktionslinie (LP) für ophthalmische Linsen, wobei die Tablett-Reinigungsstation (W) ein Förderband (T) für den Transport von Tabletts (B) umfasst, das die Linsen trägt, umfassend Mittel (X) zur Entnahme eines Tabletts (B) aus dem Fördererband (T), eine Kammer (CH) zum Reinigen des Tabletts (B) und ein Übertragungsmittel (TR) des Tabletts (B) zwischen dem Extraktionsmittel (X) und der Kammer (CH), **dadurch gekennzeichnet dass** die Übertragungsmittel so konfiguriert sind, dass sie das Tablett (B) in die Reinigungskammer (CH) einführen, und wobei die Extraktionsmittel eine drehbare Basis (BX), die zwei Arme (X1, X2) trägt, die jeweils an ihrem Ende mit einem Polster (P1, P2) versehen sind, die dazu bestimmt sind, ein Tablett (B) seitlich zu drücken, eine Drehachse (Γ) der drehbaren Basis (BX) und ein Stellglied (DX) zum Drehen der Achse (Γ) umfassen, wobei die drehbare Basis (BX) mit einem linearen Stellglied zum Einstellen des Abstands zwischen den Armen (X1, X2) versehen ist, was das Einklemmen eines Tabletts (B) zwischen den Polstern (P1, P2) ermöglicht.

2. Tablett-Reinigungsstation (W) nach einem der vorhergehenden Ansprüche, wobei die Übertragungsmittel (TR) zwei Klemmarme (TR1, TR2), die jeweils an ihrem Ende mit einem Polster (TR3, TR4) versehen sind, umfassen, eine verschiebbare Basis (TRS), die die Klemmarme (TR1, TR2) trägt, und eine Führung (G) für die Verschiebung der verschiebbaren Basis (TRS), wobei die verschiebbare Basis (TRS) ein lineares Stellglied zur Einstellung des Abstands zwischen den Klemmarmen (TR1, TR2) umfasst, so dass ein Tablett (B) zwischen die Polster (P3, P4) geklemmt werden kann.

3. Tablett-Reinigungsstation (W) nach einem der Ansprüche 1 und 2, wobei die Polster (P1, P2) von den Armen (X1, X2) der drehbaren Basis (BX) so angeordnet sind, dass sie die Tabletts (B) auf zwei Seiten der Tabletts (B) einklemmen, und die Polster (TR3, TR4) der Klemmarme (TR1, TR2) so angeordnet sind, dass sie die Tabletts (B) an den beiden anderen Seiten der Tabletts (B) einklemmen.

4. Tablett-Reinigungsstation (W) nach einem der vorhergehenden Ansprüche, wobei die die Extraktionsmittel (X) so konfiguriert sind, dass sie eine Drehung mit einem Winkel von mehr als 90° ausführen und so das Umkippen eines Tabletts (B) ermöglichen.

5. Tablett-Reinigungsstation (W) nach einem der vorhergehenden Ansprüche, wobei die Kammer (CH) einen vertikalen Schlitz (VS) zum Einführen des Tabletts (B) aufweist.

6. Tablett-Reinigungsstation (W) nach einem der vorhergehenden Ansprüche, wobei die Kammer (CH) mindestens zwei vertikal angeordnete Luftleitkanäle (W1) und mindestens zwei vertikal angeordnete Wasserleitkanäle (W2) umfasst.

7. Tablett-Reinigungsstation (W) nach Anspruch 5 und 6, wobei die Luftleitkanäle (W1) und die Wasserleitkanäle (W2) so angeordnet sind, dass sie zwischen sich einen vertikalen Schlitz definieren, der mit dem vertikalen Schlitz (VS) zusammenfällt, wobei die Übertragungsmittel (TR) so angeordnet ist, dass sie das Tablett (B) durch den vertikalen Schlitz (VS) einführen und es zwischen den Luftleitkanälen (W1) und den Wasserleitkanälen (W2) platzieren.

8. Tablett-Reinigungsstation (W) nach Anspruch 2 und Anspruch 5 oder Anspruch 7, wobei die Kammer (CH) eine Schiebetür (SD) umfasst, die dazu bestimmt ist, den vertikalen Schlitz (VS) zu schließen, und einem Stellgliedmittel (AD) zum automatischen Schließen der Schiebetür (SD), die Schiebetür (SD) und die Kammer (CH) umfassen Aussparungen (S1, S2), um das Einführen der Klemmarme (TR1, TR2) zu ermöglichen, so dass die Kammer (CH) geschlossen werden kann, wenn ein Tablett (B) gewaschen wird, und sie in eine Translationsbewegung versetzt werden kann, um ihre gesamte Oberfläche den Düsen auszusetzen.

9. Tablett-Reinigungsstation (W) nach einem der vorhergehenden Ansprüche, wobei die Polster Einstellmittel (AM) zum Einstellen des Abstands zwischen den Polstern umfassen und die Station dann an die Behandlung verschiedener Tablettformate anpassen.

10. Tablett-Reinigungsstation (W) nach Anspruch 6, die einen oder zwei Tanks (D1, D2), die unter den Kanälen (W1, W2) angeordnet sind, und eine Ablenkvorrichtung (D) umfasst, die es ermöglicht, das Wasser abzulenken in eines der beiden Reservoirs (D1, D2) fallen.

11. Tablett-Reinigungsstation (W) nach einem der vorhergehenden Ansprüche, die eine Pumpe zum Pumpen von Wasser in die Kammer (CH) mit einem Druck zwischen 10 und 80 bar umfasst.

12. Tablett-Reinigungsstation (W) nach einem der vorhergehenden Ansprüche, die eine Steuerung aufweist, wobei die Steuerung zur Anwendung verschiedener Reinigungsprogramme konfiguriert ist.

13. Fertigungsstraße (LP) zur Herstellung von Brillengläsern (L), umfassend Behandlungsstationen (ET), die durch mindestens ein Förderband (T) für den Transport und die Übergabe zwischen den Stationen (ET) von die Linsen (L) tragenden Tabletts (B) verbunden sind), wobei die Fertigungsstraße (LP) mindestens eine Tablett-Reinigungsstation (W) nach einem der vorhergehenden Ansprüche umfasst.

14. Fertigungsstraße (LP) nach Anspruch 13, wobei die Reinigungsstation so konfiguriert, dass immer ein Tablett (B) gereinigt wird.

## Revendications

1. Station de nettoyage de plateaux (W) pour ligne de production de lentilles ophtalmiques (LP), la station de nettoyage de plateaux (W) comprenant un convoyeur à bande (T) pour le transport de plateaux (B) supportant les lentilles, comprenant des moyens d'extraction (X) pour extraire un plateau (B) du convoyeur à bande (T), une chambre (CH) pour nettoyer le plateau (B) et des moyens de transfert (TR) pour transférer le plateau (B) entre les moyens d'extraction (X) et la chambre (CH), **caractérisé en ce que** les moyens de transfert sont configurés pour introduire le plateau (B) dans la chambre de nettoyage (CH), et **en ce que** les moyens d'extraction (X) comprennent une base rotative (BX) qui supporte deux bras (X1, X2), chacun pourvu à son extrémité d'un coussinet (P1, P2) destiné à presser latéralement un plateau (B), un axe de rotation (Γ) de la base rotative (BX), et un actionneur (DX) pour la rotation de l'axe (Γ), la base rotative (BX) étant munie d'un actionneur linéaire pour ajuster la distance entre les bras (X1, X2), permettant ainsi de serrer un plateau (B) entre les coussinets (P1, P2).

2. Station de nettoyage de plateaux (W) selon l'une quelconque des revendications précédentes, dans laquelle les moyens de transfert (TR) comprennent deux bras de serrage (TR1, TR2), chacun muni à son extrémité d'un coussinet (TR3, TR4), une base mobile en translation (TRS) qui supporte les bras de serrage (TR1, TR2), et un guide (G) pour le mouvement de translation de la base mobile en translation (TRS), la base mobile en translation (TRS) comprenant un actionneur linéaire pour ajuster la distance entre les bras de serrage (TR 1, TR2), permettant ainsi de serrer un plateau (B) entre les coussinets (P3, P4).

3. Station de nettoyage de plateaux (W) selon les revendications 1 et 2, dans laquelle les coussinets (P1, P2) des bras (X1, X2) de la base rotative (BX) sont agencés pour serrer les plateaux (B) sur deux côtés des plateaux (B) et les coussinets (TR3, TR4) des bras de serrage (TR 1, TR2) sont agencés pour serrer les plateaux (B) sur les deux autres côtés des plateaux (B).

4. Station de nettoyage de plateaux (W) selon l'une quelconque des revendications précédentes, dans laquelle les moyens d'extraction (X) sont configurés pour effectuer une rotation ayant un angle supérieur à 90°, permettant ainsi de retourner un plateau (B).

5. Station de nettoyage de plateaux (W) selon l'une quelconque des revendications précédentes, dans laquelle la chambre (CH) comprend une fente verticale (VS) pour introduire le plateau (B).

6. Station de nettoyage de plateaux (W) selon l'une quelconque des revendications précédentes, dans laquelle la chambre (CH) comprend au moins deux conduites d'air (W1) disposées verticalement, et au moins deux conduites d'eau (W2) disposées verticalement.

7. Station de nettoyage de plateaux (W) selon les revendications 5 et 6, dans laquelle les conduites d'air (W1) et les conduites d'eau (W2) sont agencées de manière à définir entre elles une fente verticale coïncidant avec la fente verticale (VS), le moyen de transfert (TR) étant agencé pour introduire le plateau (B) par la fente verticale (VS) et le placer entre les conduites d'air (W1) et les conduites d'eau (W2).

8. Station de nettoyage de plateaux (W) selon la revendication 2 et la revendication 5 ou la revendication 7, dans laquelle la chambre (CH) comprend une porte coulissante (SD) destinée à fermer la fente verticale (VS), et des moyens d'actionnement (AD) pour fermer automatiquement la porte coulissante (SD), la porte coulissante (SD) et la chambre (CH) comprenant des évidements (S1, S2) pour permettre l'introduction des bras de serrage (TR1, TR2), permettant ainsi de fermer la chambre (CH) lors du lavage d'un plateau (B) et de le déplacer en translation pour exposer toute sa surface aux buses.

9. Station de nettoyage de plateaux (W) selon l'une quelconque des revendications précédentes, dans laquelle les coussinets comprennent des moyens d'ajustement (AM) pour ajuster la distance entre eux, et ainsi adapter la station au traitement de différents formats de plateaux.

10. Station de nettoyage de plateaux (W) selon la revendication 6, qui comprend un ou deux réservoirs (D1, D2) disposés sous les conduites (W1, W2) et un déflecteur (D) permettant de dévier l'eau tombant vers l'un ou l'autre des réservoirs (D1, D2).

11. Station de nettoyage de plateaux (W) selon l'une quelconque des revendications précédentes, qui comprend une pompe pour pomper de l'eau dans la chambre (CH) à une pression comprise entre 10 et 80 bars.

12. Station de nettoyage de plateaux (W) selon l'une quelconque des revendications précédentes, qui comporte un contrôleur, ledit contrôleur étant configuré pour appliquer différents programmes de nettoyage.

13. Ligne de production (LP) pour la fabrication de lentilles ophtalmiques (L) pourvue de stations de traitement (ET) reliées par au moins un convoyeur à bande (T) pour le transport et le transfert, entre les stations (ET), de plateaux (B) supportant les lentilles (L), la ligne de production (LP) comprenant au moins une station de nettoyage de plateaux (W) selon l'une quelconque des revendications précédentes.

14. Ligne de production (LP) selon la revendication 13, dans laquelle la station de nettoyage est configuré pour être toujours en train de nettoyer un plateau (B).
